Europäisches Patentamt

European Patent Office

Office européen des brevets

(11) Publication number: **0 291 174 B1**

(12) **EUROPEAN PATENT SPECIFICATION**

(45) Date of publication of patent specification: **15.07.92**   (51) Int. Cl.[5]: **C10M 175/04**, B01D 17/04

(21) Application number: **88303359.9**

(22) Date of filing: **14.04.88**

(54) **Process for treatment of contaminated emulsion.**

(30) Priority: **15.04.87 ZA 872706**

(43) Date of publication of application:
**17.11.88 Bulletin  88/46**

(45) Publication of the grant of the patent:
**15.07.92 Bulletin  92/29**

(84) Designated Contracting States:
**AT BE CH DE ES FR GB GR IT LI LU NL SE**

(56) References cited:
**AT-A- 365 626**
**DE-A- 2 818 774**
**US-A- 4 123 357**
**US-A- 4 515 684**

(73) Proprietor: **ISCOR LIMITED**
**Roger Dyason Road**
**Pretoria Transvaal(ZA)**

Proprietor: **SCIENTIFIC CONSTRUCTION CC**
**134 Mount Street Bryanston**
**Sandton Transvaal(ZA)**

(72) Inventor: **Lake, Alan Wainwright**
**134 Mount Street**
**Bryanston Sandton Transvaal(ZA)**

(74) Representative: **Jenkins, Peter David et al**
**PAGE, WHITE & FARRER 54 Doughty Street**
**London WC1N 2LS(GB)**

## Description

This invention relates to a process for the treatment of a contaminated emulsion, comprising an internal or dispersed phase which is water, and an external or continuous phase, which may be an oil and/or fat, in order to recover the external phase substantially free of contaminants.

In the rest of this specification the term "fat" will be used to denote fats in both the solid and liquid form.

One example of such an emulsion is found in the hot and cold rolling processes in the metal working industry where blends of fats, for example glyceryl esters of higher fatty acids, fatty acids and mineral oils, are blended with suitable emulsifiers or dispersants to form lubricants which are used to lubricate and cool the rolling equipment. Generally, such a lubricant is applied in admixture with water and sprayed onto the working zone. The waste lubricant which washes from the working zone is collected in a suitable settling tank, and the waste skimmed off. Usually this waste is then collected, drained, and dumped. The process of lubrication usually demands that an excess of lubricant is used, much of which accordingly ends up as a waste.

The largest use of such lubricants is with equipment used in the working of steel. In this instance the waste usually comprises a water-in-fat emulsion which includes contaminants such as iron fines, breakdown products of fats, partially hydrolysed glycerides, and iron soaps. Such a waste is difficult to treat to release the recoverable fats and, to date, many processes have been suggested for the recovery of the fats for possible re-use.

One such a known process, the so called Titzel process, involves cooking the waste under pressure at high temperature to produce a wet fatty substance containing a high proportion of unwanted iron soaps. Another process, again, comprises cooking the waste with a strong mineral acid for a long period to break down and dissolve out all the iron. The resulting product is hard to wash in order to remove the acid, and the product also tends to emulsify with water. In neither of these processes is a fat produced which is satisfactory for direct re-use.

Although it is also known to use the two aforesaid processes successively in order to obtain an iron free end product, such a combined process leads to the generation of a large volume of iron salts in water, which is strongly acid. Thus, the use of the combined processes successively is expensive, wasteful in heating, while a residue is yielded which presents a serious effluent disposal problem.

A third process which has been suggested, is to treat the waste with a demulsifier in acidic conditions. However, this still leaves the problem of final dewatering of the recovered fat. DE-A-2818774 discloses a process for separating a three phase system and a metal. The three phase system comprises a water soluble metal binder, a water immiscible organic liquid and water. The separation is accomplished using an aqueous solution, the surface tension of which is around 0.5 N/m larger or smaller than that of the organic liquid.

US-A-4515684 discloses a process and apparatus for the reclamation of oil from mixtures of oil, water and particulate solids. A demulsifying agent is added to a central mixing zone surrounded by a settling tank at a first temperature. Typically, the surrounding settling tank consists of a cylindrical zone and a conical zone and a clarified-oil outlet, preferably in the form of an annular, peripheral weir is provided opposite the settling zone. Clarified oil is passed to a surge zone operated with a desicating filter to remove final quantities of solids and water from the oil.

There is accordingly a need for an improved process for the treatment of an emulsion such as a waste lubricant in order to recover the external phase for re-use, and it is an object of this invention to provide such a process.

The present invention provides a process for the treatment of an emulsion comprising a spent metal rolling process lubricant contaminated with iron fines, the emulsion comprising an internal phase which is water, and an external phase which is a fat, in order to recover the external phase free of iron fines, including the steps of:

(a) if the water content of the untreated emulsion relative to that of the rest of the emulsion is less than 50% on a mass to mass basis, mixing the contaminated emulsion with a volume of water sufficient to increase the total water content to at least 50% on the said basis;

(b) mixing the emulsion or the product of step (a) with a short-chain organic acid to lower the pH thereof to less than 5;

(c) if such components are not already present in a sufficient amount in the emulsion, mixing the product of step (b) with an amount of an emulsifier and, if required, an amount of a demulsifier;

(d) allowing the products of steps (b) or (c) to settle to form an upper layer comprising the external phase; a lower aqueous layer; and a precipitate of solid contaminants.

The emulsion is preferably a water-in-fat emulsion and the process of the invention is preferably designed for the recovery of the external phase of an emulsion containing contaminants, e.g. for the recovery of a fat from a water-in-fat emulsion containing contaminants. The initial product to be treated may, for example, be a used lubricant, e.g. a lubricant used in hot and/or cold rolling processes, a margarine, a cooking fat, a mayonnaise or the like. The end product of the process of the invention is an external phase, i.e. a fat, free of water and contaminants, which is suitable for re-use.

The emulsifier may, for example, comprise a partially hydrolysed ester of a poly hydric alcohol.

When the emulsion being treated is a water-in-fat emulsion, the emulsifier can be the degradation products of the fat, viz. diglycerides and monoglycerides. For other emulsions, the emulsifier may for example, be a sorbitan ester or a glycol ester.

The first step of the process of the invention is, if the water content of the emulsion is less than 50% on a mass per mass basis relative to the rest of the emulsion, to add to the emulsion an amount of water sufficient to ensure that the total volume of the water in the mixture is at least equal to the volume of the rest of the emulsion.

The second step of the process of the invention is to add to the emulsion, or to the mixture of the emulsion and water, a short-chain organic acid in an amount sufficient to lower the pH of the mixture to less than 5, preferably between 3 and 4. Preferably a short-chain organic acid is used which is both water soluble and fat-soluble.

Examples of suitable short-chain organic acids which may be used include formic acid, acetic acid, propionic acid, butyric acid, hydroxyacetic acid, benzoic acid, capric acid, caproic acid and caprylic acid. Certain of these acids have an unpleasant odour and the preferred acid to use is benzoic acid.

The third step of the process of the invention is, if these products are not already present in the emulsion in a sufficient amount, to add to the mixture resulting from the second step, an amount of a suitable emulsifier and demulsifier. Generally, the addition of emulsifier and demulsifier will be necessary in order to achieve a suitable separation of the external phase from the aqueous component. It will be appreciated that in some instances the emulsion may already contain a sufficient amount of a suitable emulsifier or demulsifier which occur naturally in the emulsion, and that it will then not be necessary to add any additional emulsifier or demulsifier.

The emulsifier may be any suitable one such as one having a water and fat solubility at temperatures up to 70°C. It may be anionic or nonionic with an Hydrophylic-Lipophylic-Balance (HLB) between 8 and 12. Examples of suitable emulsifiers are certain phosphate esters, such as those sold under the trade name GAFAC RE610 (supplied by General Anilin Fabriek), and Hoechst-Hostaphat M.D. (supplied by Hoechst).

The demulsifier may also be any suitable one. Generally, the demulsifier will be cationic or nonionic, soluble in fat, and with an HLB between 2 to 5. Examples of suitable demulisifiers include a fatty imidazoline such as that sold under the trade name CASAMINE R (supplied by Shell SA (Pty) Limited), and UNAMIDET (supplied by Lonza), which is a hydroxyethyl fatty acid-imidazoline.

The emulsifier may be added in an amount of 0,5 to 1 percent by weight of the total weight of the mixture of emulsion and water.

If necessary, the mixture resulting from step (c) above may be heated up to 100°C, to ensure that the external phase is in liquid form.

The fourth step of the process of the invention is to allow the mixture to settle into an upper and a lower layer, the upper layer comprising the external phase free of water and contaminants, and the lower layer comprising a mildly acidic aqueous layer which is easy to dispose of with a minimal treatment. The precipitate below the bottom layer comprises solid contaminants, such as metal fines.

The product to be treated, i.e. the contaminated emulsion, may also contain other ingredients such as synthetic esters and mineral oils.

Examples of the process of the invention will now be given.

EXAMPLE 1

A fatty lubricant containing approximately 10 percent of fatty acid was used as a lubricant and the waste collected. The waste consisted of 52 percent fat, 40 percent water and 8 percent iron fines. The waste was mixed with an equal volume of water so that the total water content was more than 50% on a mass to mass basis relative to the volume of the rest of the emulsion. This was done in order to make up for the expected water losses which would occur through evaporation during the subsequent heating process. An amount of benzoic acid was then added in a sufficient quantity to bring the pH of the mixture to 3,5, whereafter there was added to the mixture 0,1 percent by weight of a mixture of ethoxylated imidazoline and 0,4 percent by weight of a mixture of a mono and diacid ester of phosphoric acid and a fatty alcohol. The mixture was stirred at 60°C for three hours and allowed to settle for four hours. This resulted in the formation of an upper layer of fat containing 0,5 percent free water and 0,2 percent iron fines with the percentage fatty acid being 12,5 percent; an aqueous layer containing 1 percent of emulsified fat; and a precipitate of metal fines. The fat layer was separated, centrifuged, and after the original dispersion system was added, was suitable for re-use as a lubricating oil.

EXAMPLE 2

A used tallow-based tin plate rolling oil was collected from a rolling mill as a viscous mixture of fat, water and iron fines.

A quantity of 4 metric tons of the oil at a temperature of 80°C was poured into a 12 000 litre tank fitted with a steam coil and an air sponge pipe for agitation. Approximately 6 000 litres of water were added together with 25kg of each of benzoic acid and a phosphate ester. The amount of water used was again an excess for the same reason as stated above. The mixture was heated to 80°C and agitated with air. After about 6 hours, it was noted that the viscosity of the mixture had fallen to close that of hot fat, and a sample showed water separation taking place as free droplets.

The agitation and heating were terminated and the contents were allowed to settle for about 12 hours. After this period, the oil at the top of the tank assumed a normal brown colour, with a small amount of iron fines being suspended therein. The bulk of the iron fines was contained in a precipitate in the bottom of the tank.

The oil was pumped off into drums until the water layer was reached midway down the tank. The drums were then centrifuged using an Alfa-Laval-type forced ejection centrifuge at a speed of 6000 rpm. A clear brown oil was produced, the water and metal fines being rejected as a heavy sludge. The oil showed less particles in suspension than new oil, no iron soaps, only 0,1 percent of moisture, and it had an acid value of 32 mg KOH/g, which was partly due to the presence of residual additives which are not harmful to re-use.

The oil, mixed on a 50:50 basis with new oil, was found suitable for re-use for rolling. The calculated yield showed that close to 80% of the waste oil content was recovered. Of interest was the fact that due to the treatment under acid conditions no iron soaps were found in the recovered oil, even though present in the waste.

The iron containing precipitate and sludge were of interest as a source of iron fines having a particulate size of from 100 microns down to sub-micron. These iron fines were totally unoxidised and relatively easy to recover.

The above procedure was repeated on a laboratory scale without the addition of the aforesaid additives. The result was a dark, very viscous mass, containing fat, iron soaps, free iron and entrapped water in an amount of over 40%. This compound was found totally unacceptable as a rolling lubricant.

The process of the invention accordingly permits the treatment of an emulsion waste containing a contaminant such as iron fines in order to recover an external phase such as a fat suitable for use as lubricant, cheaply, efficiently and with little pollution. The recovered fat may be re-used, e.g. as a lubricant either as such or mixed with such additives as may be required. The iron fines may also be re-used in many applications, such as in the sintered metal industry, for example.

**Claims**

1.  A process for the treatment of an emulsion comprising a spent metal rolling process lubricant contaminated with iron fines, the emulsion comprising an internal phase which is water, and an external phase which is a fat, in order to recover the external phase free of iron fines, including the steps of:

    (a) if the water content of the untreated emulsion relative to that of the rest of the emulsion is less than 50% on a mass to mass basis, mixing the contaminated emulsion with a volume of water sufficient to increase the total water content to at least 50% on the said basis;

    (b) mixing the emulsion or the product of step (a) with a short-chain organic acid to lower the pH thereof to less than 5;

    (c) if such components are not already present in a sufficient amount in the emulsion, mixing the product of step (b) with an amount of an emulsifier and, if required, an amount of a demulsifier; and

    (d) allowing the products of steps (b) or (c) to settle to form an upper layer comprising the external phase; a lower aqueous layer; and a precipitate containing the contaminants.

2.  The process of claim 1 wherein the emulsifier comprises a partially hydrolysed ester of a poly hydric alcohol.

3.  The process of any one of the preceding claims wherein the emulsifier is a degradation product of the fat, viz diglycerides and monoglycerides.

4.  The process of any one of claims 1 or 2 wherein the emulsifier comprises a sorbitan ester or a glycol ester.

5.  The process of any one of the preceding claims wherein the short-chain organic acid is added in an amount sufficient to lower the pH of the mixture to a value between 3 and 4.

6.  The process of any one of the preceding claims wherein the short-chain organic acid is both water soluble and fat-soluble.

7. The process of any one of the preceding claims wherein the short-chain organic acid comprises one or more components of the group including formic acid, acetic acid, propionic acid, butyric acid, hydroxyacetic acid, benzoic acid, capric acid, caproic acid and caprylic acid.

8. The process of any one of claims 1 to 6 wherein the short chain organic acid is benzoic acid.

9. The process of any one of the preceding claims wherein the emulsifier is one having a water and fat solubility at temperatures up to 70 degrees C.

10. The process of any one of the preceding claims wherein the emulsifier is anionic or nonionic with an HLB between 8 and 12.

11. The process of any one of the preceding claims wherein the emulsifier is a phosphate ester.

12. The process of any one of the preceding claims wherein the demulsifier is cationic or nonionic, soluble in fat, and with an HLB between 2 to 5.

13. The process of any one of the preceding claims wherein the demulsifier comprises a fatty imidazoline.

14. The process of any one of the preceding claims wherein the emulsifier is added in an amount of 0,5 to 1 percent by weight of the total weight of the mixture of emulsion and water.

15. The process of any one of the preceding claims wherein the mixture resulting from step (c) of claim 1 is heated up to 100 degrees C, to ensure that the external phase is in liquid form.

**Revendications**

1. Procédé pour le traitement d'une émulsion comprenant un lubrifiant usé utilisé dans un procédé de laminage de métaux contaminé par de fines particules de fer, l'émulsion comprenant une phase interne qui est de l'eau et une phase externe qui est une graisse, dans le but de récupérer la phase externe dépourvue de fines particules de fer, comprenant les étapes de :

(a) si la teneur en eau de l'émulsion non traitée par rapport à celle du reste de l'émulsion est inférieure à 50 %, exprimé en masse par masse, mélange de l'émulsion contaminée avec un volume d'eau suffisant pour augmenter la teneur en eau totale jusqu'à au moins 50 %, exprimé de la même manière;

(b) mélange de l'émulsion ou du produit de l'étape (a) avec un acide organique à chaîne courte pour abaisser son pH jusqu'à moins de 5;

(c) si ces composants ne sont pas déjà présents en une quantité suffisante dans l'émulsion, mélange du produit de l'étape (b) avec une quantité d'un agent émulsionnant et, si nécessaire, une quantité d'un agent désémulsionnant; et

(d) décantation des produits des étapes (b) ou (c) pour former une couche supérieure constituant la phase externe; une couche aqueuse inférieure; et un précipité contenant les impuretés.

2. Procédé selon la revendication 1, dans lequel l'agent émulsionnant se compose d'un ester partiellement hydrolysé d'un polyol.

3. Procédé selon l'une quelconque des revendications précédentes, dans lequel l'agent émulsionnant est un produit de dégradation de la graisse, c'est-à-dire des diglycérides et des monoglycérides.

4. Procédé selon l'une quelconque des revendications 1 ou 2, dans lequel l'agent émulsionnant se compose d'un ester de sorbitanne ou d'un ester de glycol.

5. Procédé selon l'une quelconque des revendications précédentes, dans lequel on ajoute l'acide organique à chaîne courte en une quantité suffisante pour abaisser le pH du mélange à une valeur comprise entre 3 et 4.

6. Procédé selon l'une quelconque des revendications précédentes, dans lequel l'acide organique à chaîne courte est soluble à la fois dans l'eau et dans les graisses.

7. Procédé selon l'une quelconque des revendications précédentes, dans lequel l'acide organique à chaîne courte comprend un ou plusieurs composants choisis dans le groupe constitué par l'acide formique, l'acide acétique, l'acide propionique, l'acide butyrique, l'acide hydroxyacétique, l'acide benzoïque, l'acide caprique, l'acide caproïque et l'acide caprylique.

**8.** Procédé selon l'une quelconque des revendications 1 à 6, dans lequel l'acide organique à chaîne courte est l'acide benzoïque.

**9.** Procédé selon l'une quelconque des revendications précédentes, dans lequel l'agent émulsionnant est un agent émulsionnant soluble dans l'eau et dans les graisses à des températures pouvant aller jusqu'à 70°C.

**10.** Procédé selon l'une quelconque des revendications précédentes, dans lequel l'agent émulsionnant est anionique ou non ionique avec un rapport hydrophile/lipophile compris entre 8 et 12.

**11.** Procédé selon l'une quelconque des revendications précédentes, dans lequel l'agent émulsionnant est un ester phosphate.

**12.** Procédé selon l'une quelconque des revendications précédentes, dans lequel l'agent désémulsionnant est cationique ou non ionique, soluble dans les graisses et présente un rapport hydrophile/lipophile compris entre 2 et 5.

**13.** Procédé selon l'une quelconque des revendications précédentes, dans lequel l'agent désémulsionnant comprend une imidazoline grasse.

**14.** Procédé selon l'une quelconque des revendications précédentes, dans lequel on ajoute l'agent émulsionnant en une quantité de 0,5 à 1 % en poids du poids total du mélange de l'émulsion et de l'eau.

**15.** Procédé selon l'une quelconque des revendications précédentes, dans lequel on chauffe le mélange résultant de l'étape (c) de la revendication 1 jusqu'à 100 degrés C, pour être sûr que la phase externe soit sous forme liquide.

**Patentansprüche**

**1.** Verfahren zur Behandlung einer Emulsion, umfassend ein verbrauchtes Schmiermittel von einem Metall-Walzverfahren, das mit Metallfeinteilen verunreinigt ist, wobei die Emulsion eine innere Phase umfaßt, die Wasser ist, und eine äußere Phase, die ein Fett ist, um die äußere Phase frei von Eisenfeinteilen zurückzugewinnen, umfassend die Stufen

(a) wenn der Wassergehalt der unbehandelten Emulsion, bezogen auf den(jenigen des) Rest(es) der Emulsion, <50% ist, Vermischen der verunreinigten Emulsion mit einem Wasser-Volumen, das ausreicht, um den Gesamt-Wassergehalt auf mindestens 50% auf dieser Basis zu erhöhen;

(b) Vermischen der Emulsion oder des Produkts der Stufe (a) mit einer kurzkettigen organischen Säure, um den pH-Wert auf <5 zu verringern;

(c) wenn derartige Komponenten nicht schon in ausreichender Menge in der Emulsion vorhanden sind, Vermischen des Produktes der Stufe (b) mit einer Menge eines Emulgators und, wenn erforderlich, einer Menge eines Demulgators und

(d) Absetzenlassen des Produks der Stufen (b) oder (c) zur Bildung einer oberen Schicht, umfassend die äußere Phase, einer unteren wäßrigen Schicht und eines Niederschlags, enthaltend die Verunreinigungen.

**2.** Verfahren nach Anspruch 1, wobei der Emulgator einen partiell hydrolysierten Ester eines mehrwertigen Alkohols umfaßt.

**3.** Verfahren nach einem der vorangehenden Ansprüche, wobei der Emulgator ein Abbauprodukt des Fettes ist, nämlich Diglyceride und Monoglyceride.

**4.** Verfahren nach Anspruch 1 oder 2, wobei der Emulgator einen Sorbitanester oder einen Glykolester umfaßt.

**5.** Verfahren nach einem der vorangehenden Ansprüche, wobei die kurzkettige organische Säure in einer Menge zugesetzt wird, die ausreicht, den pH-Wert des Gemisches auf einen Wert zwischen 3 und 4 zu verringern.

**6.** Verfahren nach einem der vorangehenden Ansprüche, wobei die kurzkettige organische Säure sowohl wasserlöslich als auch fettlöslich ist.

**7.** Verfahren nach einem der vorangehenden Ansprüche, wobei die kurzkettige organische Säure eine oder mehrere Verbindungen aus der Gruppe Ameisensäure, Essigsäure, Propionsäure, Buttersäure, Hydroxyessigsäure, Benzoesäure, Caprinsäure, Capronsäure und Caprylsäure umfaßt.

**8.** Verfahren nach einem der Ansprüche 1 bis 6, wobei die kurzkettige organische Säure Benzoesäure ist.

**9.** Verfahren nach einem der vorangehenden Ansprüche, wobei der Emulgator ein solcher mit einer Wasser- und Fettlöslichkeit bei Temperaturen bis zu 70°C ist.

**10.** Verfahren nach einem der vorangehenden Ansprüche, wobei der Emulgator anionisch oder nicht-ionisch ist mit einem HLB-Wert zwischen 8 und 12.

**11.** Verfahren nach einem der vorangehenden Ansprüche, wobei der Emulgator ein Phosphatester ist.

**12.** Verfahren nach einem der vorangehenden Ansprüche, wobei der Demulgator kationisch oder nicht-ionisch, in Fett löslich ist und einen HLB-Wert zwischen 2 und 5 besitzt.

**13.** Verfahren nach einem der vorangehenden Ansprüche, wobei der Demulgator ein Fett-imidazolin umfaßt.

**14.** Verfahren nach einem der vorangehenden Ansprüche, wobei der Emulgator in einer Menge von 0,5 bis 1 Gew.-%, bezogen auf das Gesamt-Gewicht aus Emulsion und Wasser, zugegeben wird.

**15.** Verfahren nach einem der vorangehenden Ansprüche, wobei das in Stufe (c) des Anspruchs 1 erhaltene Gemisch auf bis zu 100°C erhitzt wird, um sicherzustellen, daß die äußere Phase in flüssiger Form vorliegt.